# EUROPÄISCHE PATENTSCHRIFT

(11) **EP 3 809 035 B1**
(45) Veröffentlichungstag und Bekanntmachung des Hinweises auf die Patenterteilung: **01.12.2021**
(21) Anmeldenummer: 20197865.7
(22) Anmeldetag: 23.09.2020
(51) Int. Cl.: F16P 3/14, F16P 3/08

(54) **SICHERHEITSSYSTEM MIT EINEM SICHERHEITSSCHALTER**
SAFETY SYSTEM WITH A SAFETY SWITCH
SYSTÈME DE SÉCURITÉ DOTÉ D'UN COMMUTATEUR DE SÉCURITÉ

(30) Priorität: 14.10.2019 DE 102019127614
(43) Veröffentlichungstag der Anmeldung: 21.04.2021
(73) Patentinhaber: SICK AG, 79183 Waldkirch (DE)
(72) Erfinder: Kok Heng Phay, Victor, 507082 Singapur (SG)

(56) Entgegenhaltungen:
- DE-A1-102006 046 437
- DE-A1-102012 111 342
- US-A1- 2016 260 565

## Beschreibung

Die vorliegende Erfindung betrifft ein Sicherheitssystem mit einem Sicherheitsschalter nach dem Oberbegriff von Anspruch 1. Sicherheitsschalter ist eine marktübliche und synonyme Bezeichnung für Verriegelungseinrichtung oder Verriegelungseinheit mit Zuhaltung gemäß der Norm EN ISO 14119.

In der Industrie werden Maschinen eingesetzt, die für Menschen gefährlich sein können. Beispiele für solche Maschinen sind Pressen oder Roboter, die für den Menschen gefahrbringende Bewegungen ausführen. Diese Bereiche werden beispielsweise durch mechanische Zäune oder Lichtgitter abgesichert. Um dennoch in den Bereich der gefährlichen Maschine zu gelangen zu können, sind bewegliche Schutzeinrichtungen, beispielsweise Türen vorgesehen, die mit Sicherheitsschaltern versehen sind. Wird die Tür geöffnet, sorgt der Sicherheitsschalter für eine Abschaltung der Maschine.

Derartige Sicherheitsschalter weisen weiter eine Zuhaltung auf, so dass die Türe blockiert ist und gar nicht geöffnet werden kann. Lediglich durch einen Stoppbefehl an der Türe oder an dem zentralen Mensch-Maschinen-Interfache (HMI) der Maschine kann die Zuhaltung deaktiviert werden, um Zutritt zu dem Gefahrenbereich zu erhalten, wobei die gefahrbringende Bewegung abgeschaltet wird. Bei nachlaufenden Maschinen bzw. Prozessen muss die Türe so lange zugehalten werden, bis die Gefahr in der Maschine nicht mehr besteht.

Die Türen an Maschinen dienen als Schutzeinrichtung, nämlich als bewegliche Schutzeinrichtung im Sinne der Maschinenrichtlinie.

Die Überwachung und Zuhaltung der Türe wird mit am Markt verfügbaren Sicherheitsschaltern mit Zuhaltung realisiert. Es ist beispielsweise eine Bauart 2 bzw. eine Bauart 4 nach der Norm ISO 14119 bekannt. Diese Schalter basieren zum einen auf mechanischem Prinzip, z. B. der Sicherheitsschalter i10Lock von der Firma SICK oder beispielsweise auf RFID Technologie wie der Sicherheitsschalter mit Zuhaltung TR10 Lock oder MLP1 der Fa. SICK.

DE 10 2012 111342 A1 offenbart ein Sicherheitssystem gemäß des Oberbegriffs des Anspruchs 1.

Eine Aufgabe der Erfindung besteht darin, ein verbessertes Sicherheitssystem mit einem verbesserten Sicherheitsschalter bereitzustellen, wobei gewährleistet soll, dass der Sicherheitsschalter geschlossen oder geöffnet ist.

Die Aufgabe wird gemäß Anspruch 1 gelöst durch ein Sicherheitssystem mit einem Sicherheitsschalter zum Überwachen eines sicheren Schutzeinrichtungszustandes einer beweglichen Schutzeinrichtung, mit einem Grundgehäuse, das aus zumindest zwei Teilkörpern besteht, die zueinander positionierbar sind, wobei ein Signalempfänger in einem Teilkörper und ein Signalgeber in dem anderen Teilkörper vorgesehen sind, so dass ein sicherer Zustand der Schutzeinrichtung mittels einer Steuer- und Auswerteeinheit erfassbar ist, und einer Verriegelungseinheit mit einem Elektromagnet und einer Halteplatte, welche dem Elektromagnet gegenüberliegt, zum Verriegeln oder Entriegeln der Schutzeinrichtung, wobei die Steuer- und Auswerteeinheit ausgebildet ist, nach Überprüfung und Verifikation des Signalempfängers die Verriegelungseinheit zu entriegeln oder verriegeln, dadurch gekennzeichnet, dass eine Spule des Elektromagneten mit einem Kondensator einen Schwingkreis bildet, wobei der Schwingkreis von der Steuer- und Auswerteeinheit zyklisch mit mindestens einem Impulssignal beaufschlagt wird und die Impulsantwort von der Steuer- und Auswerteeinheit ausgewertet wird und abhängig von der Impulsantwort mindestens ein Kontakt oder ein Nichtkontakt zwischen dem Elektromagnet und der Halterplatte erfassbar ist.

Gemäß der Erfindung wird die Spule im aktivierten Zustand, in dem die Spule betrieben und mit Spannung versorgt ist, mit einem negativen Impulssignal beaufschlagt. Beispielsweise wird die Spule mit einer Spannung von 24 V versorgt. Beispielsweise wird hierzu die Versorgungsspannung der Spule für eine kurze Zeitdauer, beispielsweise 5 ms zyklisch abgeschaltet bzw. unterbrochen. Die Abschaltung bzw. Unterbrechung der Spannungsversorgung findet zyklisch beispielsweise mit Abständen von 500 ms statt, so dass der Betrieb des Elektromagneten durch die Spule nicht beeinträchtigt wird. Das Impulssignal kann auch als Testpuls bzw. Testlücke bezeichnet werden.

Die zyklische Unterbrechung bzw. Abschaltung der Versorgungsspannung erfolgt elektronisch, beispielsweise mit einem elektronischen Schalter. Bei dem elektronischen

Schalter kann es sich beispielsweise um einen Transistor, eine Transistorstufe oder ähnliches handeln. Die zyklische Unterbrechung wird von der Steuer- und Auswerteeinheit gesteuert, beispielsweise über eine Ausgangsstufe oder den Transistor gesteuert.

Die Impulsantwort bzw. Sprungantwort oder Impulsfunktion bzw. Sprungfunktion des Schwingkreises wird von der Steuer- und Auswerteeinheit ausgewertet. Vorzugsweise weist der Schwingkreis dabei eine geringe Dämpfung auf, so dass die Sprungantwort ein auswertbares Einschwingverhalten zeigt, abhängig von der Halteplatte in der Nähe oder in Kontakt mit dem Elektromagneten. Die Kurvenform des Einschwingverhaltens ändert sich je nach Nähe bzw. bei einem Kontakt der Halteplatte mit dem Elektromagneten, da die Spule des Elektromagneten durch die metallische Halteplatte elektromagnetisch beeinflusst wird.

Ohne Halteplatte wird der Kondensator im Schwingkreis während der Pulsdauer beispielsweise schneller entladen, so dass die Sprungantwort eine Ladekurve des Kondensators mit einer kurzen Zeitkonstanten bildet.

Ist die Halteplatte wenige Millimeter von dem Elektromagnet entfernt so wird der Kondensator im Schwingkreis während der Pulsdauer beispielsweise weniger schnell entladen, so dass die Sprungantwort eine Ladekurve mit einer längeren Zeitkonstanten ist.

Ist die Halteplatte in Kontakt, bzw. in elektrischem Kontakt mit dem Elektromagnet, so wird der Kondensator im Schwingkreis während der Pulsdauer beispielsweise am langsamsten entladen, so dass die Sprungantwort eine Ladekurve mit einer noch längeren Zeitkonstanten ist.

Gemäß der Erfindung kann beispielsweise die Flankensteilheit der Sprungantwort oder ein Vergleich der Sprungantwort mit einem Vergleichswert bzw. einem Schwellwert verglichen werden.

Die Auswertung der Sprungantwort erfolgt beispielsweise über eine einfache Transistorschaltung bzw. eine Transistorstufe, welche von der Steuer- und Auswerteeinheit ausgewertet wird.

In Weiterbildung der Erfindung ist der Schwingkreis ein Parallelschwingkreis. Dabei liegt die Spule des Elektromagneten parallel zu dem Kondensator. Der Parallelschwingkreis hat die Eigenschaft, dass bei Resonanz der an den Klemmen beobachtbare Widerstand gegen unendlich geht.

Der Parallelschwingkreis hat den Vorteil, dass die Spule bzw. der Elektromagnet statisch betrieben werden kann und der Kondensator im statischen Betriebsmodus quasi keine Auswirkung hat da dieser geladen ist und damit einen nahezu unendlich hohen Widerstand bildet.

In Weiterbildung der Erfindung beträgt ein Dämpfungsfaktor ξ des Schwingkreises höchstens 0,3 und insbesondere höchstens 0,2. Damit wird ein Schwingkreis verwendet, welcher ein hohes Überschwingverhalten aufweist. Damit werden während der kurzen Abschaltungsimpulsen bzw. Spannungsimpulsen steile Flanken der Impulsantwort erzeugt die einfach auszuwerten sind.

Die Pulsbreite hängt vom Elektromagneten, insbesondere von der Induktivität der Spule und der Kapazität des Kondensators ab. In Weiterbildung der Erfindung beträgt die Impulsbreite maximal 6 ms, insbesondere maximal 5 ms, wobei die Impulse einen Abstand von mindestens 400 ms insbesondere von mindestens 500 ms haben. Damit führt die Impulsbreite nicht zu einer Funktionseinschränkung des Elektromagneten im aktiven Zustand mit angelegter Spannung. Weiter ist die Impulsbreite bzw. Impulslänge lang genug, um eine einfache Auswertung vornehmen zu können. So kann die Steuer- und Auswerteeinheit einfach und preiswert ausgebildet sein.

In Weiterbildung der Erfindung ist zur Auswertung der Impulsantwort ein NPN-Transistor, oder eine NPN-Transistorstufe angeordnet. Der NPN-Transistor ist beispielsweise in einer Emitter-Schaltung angeordnet. Dabei ist die Spannung des Elektromagneten über eine Spannungssteiler dem NPN-Transistor als Eingangssignal zugeführt. Der Kollektoranschluss ist über einen Widerstand mit einem Bezugspotential von beispielsweise 3,3 oder 5 Volt verbunden. Der Emitteranschluss ist gegen Masse geschaltet. Der Kollektor ist als Signalausgang mit der Steuer- und Auswerteeinheit verbunden.

Dabei führt eine abnehmende Spannung der Impulsantwort an dem Basisanschluss zu einem Sperren des Transistors und damit zu einem positiven digitalisierten Spannungssignal an dem Ausgang des Transistors nämlich der Kollektor-Emitter Strecke des Transistors.

Das positive Ausgangssignal des Transistors ist umso länger je langsamer der Kondensator aufgeladen wird bzw. je länger die Zeitkonstante ist.

Damit kann am Ausgang des Transistors bzw. der Transistorstufe ein einfaches digitales Ausgangssignal von der Steuer- und Auswerteeinheit ausgewertet werden.

Die Detektion des Signalgebers durch den Signalempfänger und die Detektion der Halteplatte mittels der Impulsauswertung bilden zwei diversitäre Signalquellen, wodurch eine diversitäre und redundante Signalauswertung bereitgestellt wird, welche einen hohen Sicherheitslevel erfüllt. So kann der Sicherheitsschalter einen Sicherheits-Integritätslevel von bis zu SIL3 erfüllen nach IEC61508/IEC61511.

In Weiterbildung der Erfindung ist der Signalgeber und der Signalempfänger als RFID-System mit RFID-Transponder und RFID-Lesegerät ausgebildet sind. Dabei ist der RFID-Transponder an dem ersten Teilkörper angeordnet an dem die Halteplatte angeordnet ist. Damit bildet der erste Teilkörper ein passives Bauteil, ohne eigene Spannungsversorgung.

Das RFID-Lesegerät ist an dem zweiten Teilkörper angeordnet an dem auch der Elektromagnet angeordnet ist. Der zweite Teilkörper bildet ein aktives Bauteil mit einem Anschluss für Signalleitungen und eine Spannungsversorgung. Mit dem RFID-Lesegerät kann festgestellt werden, ob sich der RFID-Transponder in der Nähe des RFID-Lesegeräts befindet. Dadurch kann festgestellt werden ob der erste Teilkörper in der Nähe des zweiten Teilkörpers ist.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein erfindungsgemäßes Sicherheitssystem mit einem Sicherheitsschalter;
- Figur 2: eine Auswerteschaltung;
- Figur 3: eine Versorgungsspannung mit Spannungsunterbrechungen;
- Figur 4: eine Sprungantwort oder Impulsfunktion;
- Figur 5 bis Figur 7: jeweils eine Sprungantwort und ein Ausgangssignal.
- Figur 8: eine Anlage mit einem Sicherheitssystem;

In den nachfolgenden Figuren sind identische Teile mit identischen Bezugszeichen versehen.

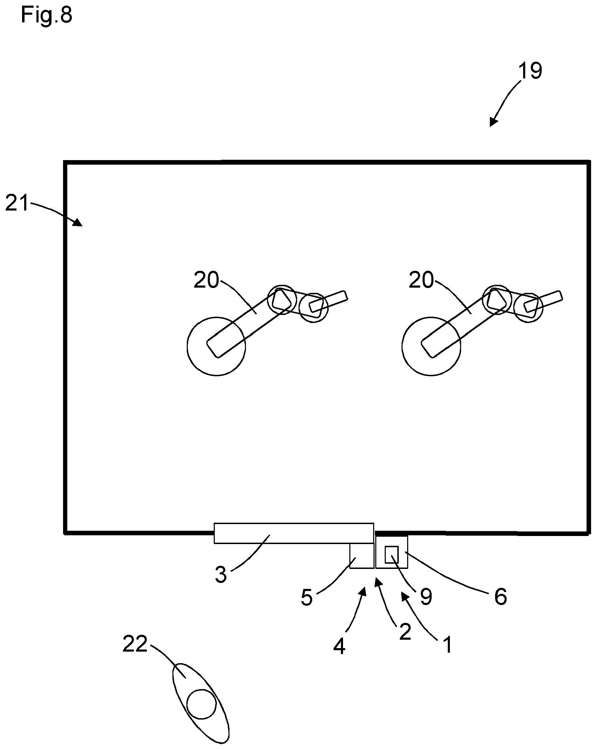

Figur 8 zeigt eine Anlage 19 mit einem Roboter 20 und einem Gefahrenbereich 21. Gemäß Figur 8 ist ein Sicherheitssystem 1 angeordnet mit einem Sicherheitsschalter 2 zum Überwachen eines sicheren Schutzeinrichtungszustandes einer beweglichen Schutzeinrichtung 3, mit einem Grundgehäuse 4, das aus zumindest zwei Teilkörpern 5 und 6 besteht, die zueinander positionierbar sind

Bei der Anlage 19 kann es sich gemäß Figur 8 beispielsweise um eine Industrieanlage zur Herstellung von Produkten handeln. Bei der Anlage 19 kann es sich auch um einen Teil einer Maschine oder um eine Anlage 19 mit mehreren Maschinen handeln. Die Anlage 19 weist einen Gefahrenbereich 21 bzw. Sicherheitsbereich auf, der nicht von Personen 22 betreten werden darf, wenn die Anlage 19 aktiv ist, da die Person 22 durch Teile der Anlage 19 gefährdet werden kann. Beispielsweise sind in der Anlage 19 ein oder mehrere Roboter 20 angeordnet, deren gefährlicher Wirkungsbereich innerhalb des Gefahrenbereichs 21 liegt.

Bei der beweglichen Schutzeinrichtung 3 kann es sich um eine Tür oder ein Tor oder ähnliches zur Absicherung eines Gefahrenbereichs handeln.

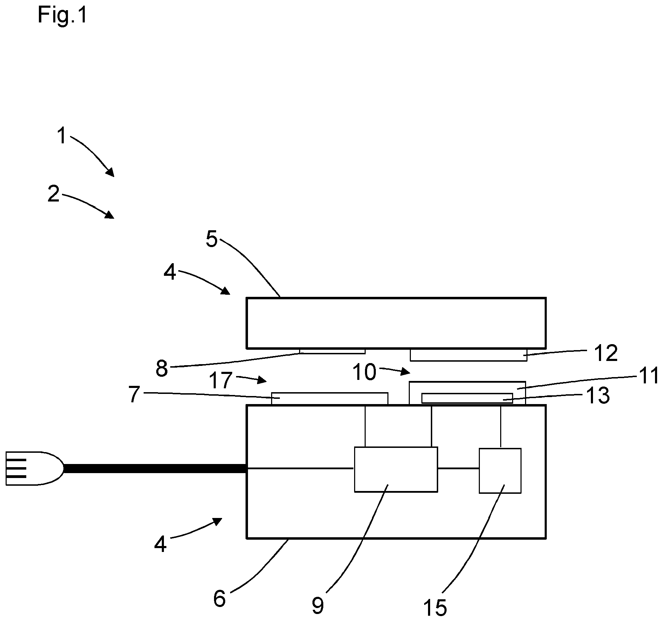

Figur 1 zeigt ein Sicherheitssystem 1 mit einem Sicherheitsschalter 2 zum Überwachen eines sicheren Schutzeinrichtungszustandes einer beweglichen Schutzeinrichtung , mit einem Grundgehäuse 4, das aus zumindest zwei Teilkörpern 5 und 6 besteht, die zueinander positionierbar sind, wobei ein Signalempfänger 7 in einem zweiten Teilkörper 6 und ein Signalgeber 8 in dem anderen ersten Teilkörper 5 vorgesehen sind, so dass ein sicherer Zustand der Schutzeinrichtung mittels einer Steuer- und Auswerteeinheit 9 erfassbar ist, und einer Verriegelungseinheit 10 mit einem Elektromagnet 11 und einer Halteplatte 12, welche dem Elektromagnet 11 gegenüberliegt, zum Verriegeln oder Entriegeln der Schutzeinrichtung, wobei die Steuer- und Auswerteeinheit 9 ausgebildet ist, nach Überprüfung und Verifikation des Signalempfängers 7 die Verriegelungseinheit 10 zu entriegeln oder zu verriegeln, dadurch gekennzeichnet, dass eine Spule 13 des Elektromagneten 11 mit einem Kondensator einen Schwingkreis 15 bildet, wobei der Schwingkreis 15 von der Steuer- und Auswerteeinheit 9 zyklisch mit mindestens einem Impulssignal beaufschlagt wird und die Impulsantwort von der Steuer- und Auswerteeinheit 9 ausgewertet wird und abhängig von der Impulsantwort mindestens ein Kontakt oder ein Nichtkontakt zwischen dem Elektromagnet 11 und der Halterplatte 12 erfassbar ist.

Gemäß Figur 1 wird die Spule 13 im aktivierten Zustand, in dem die Spule 13 betrieben und mit Spannung versorgt ist, mit einem negativen Impulssignal beaufschlagt. Beispielsweise wird die Spule 13 mit einer Spannung von 24 V versorgt. Beispielsweise wird hierzu die Versorgungsspannung der Spule 13 für eine kurze Zeitdauer, beispielsweise 5 ms zyklisch abgeschaltet bzw. unterbrochen. Die Abschaltung bzw. Unterbrechung der Spannungsversorgung findet zyklisch beispielsweise mit Abständen von 500 ms statt, so dass der Betrieb des Elektromagneten 11 durch die Spule 13 nicht beeinträchtigt wird. Das Impulssignal kann auch als Testpuls bzw. Testlücke bezeichnet werden.

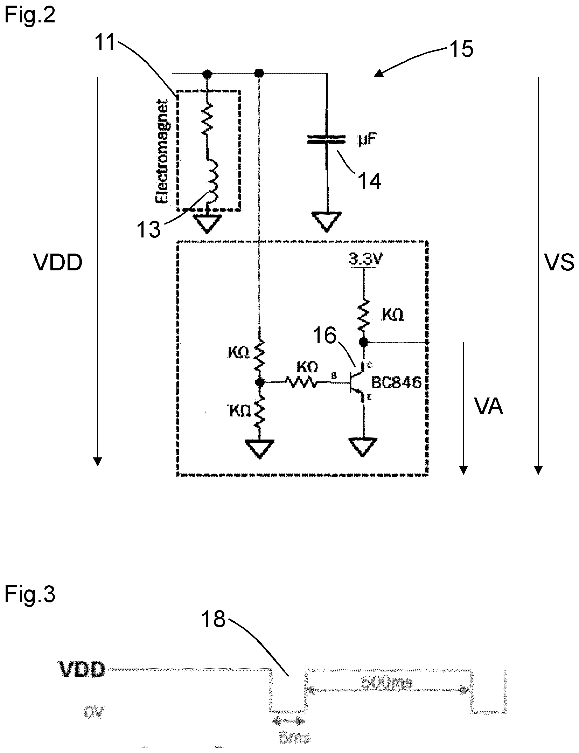

Die zyklische Unterbrechung bzw. Abschaltung der Versorgungsspannung VDD, welche in Figur 3 dargestellt ist erfolgt elektronisch, beispielsweise mit einem elektronischen Schalter. Bei dem elektronischen Schalter kann es sich beispielsweise um einen Transistor, eine Transistorstufe oder ähnliches handeln. Die zyklische Unterbrechung wird von der Steuer- und Auswerteeinheit 9 gesteuert, gemäß Figur 1, beispielsweise über eine Ausgangsstufe oder den Transistor gesteuert.

Der Schwingkreis 15 aus Figur 1 ist in Figur 2 detaillierter dargestellt. Figur 2 zeigt die Versorgungsspannung VDD, die Sprungantwort VS und das Ausgangssignal VA.

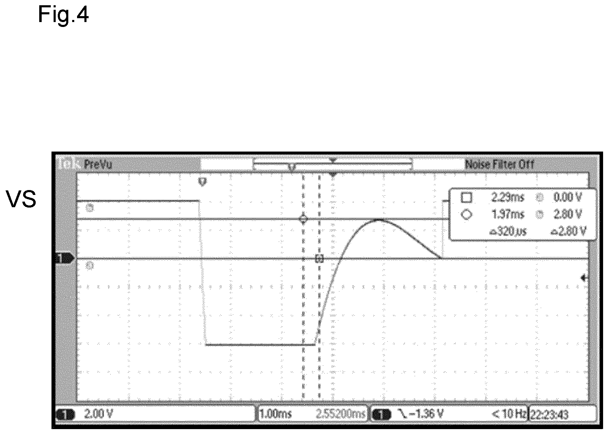

Die Impulsantwort bzw. Sprungantwort VS oder Impulsfunktion bzw. Sprungfunktion des Schwingkreises, welche in Figur 4 dargestellt ist wird von der Steuer- und Auswerteeinheit 9 ausgewertet. Vorzugsweise weist der Schwingkreis 15 dabei eine geringe Dämpfung auf, so dass die Sprungantwort VS ein auswertbares Einschwingverhalten zeigt, abhängig von der Halteplatte 12 in der Nähe oder in Kontakt mit dem Elektromagneten 11. Die Kurvenform des Einschwingverhaltens ändert sich je nach Nähe bzw. bei einem Kontakt der Halteplatte 12 mit dem Elektromagneten 11, da die Spule 13 des Elektromagneten 11 durch die metallische Halteplatte 12 elektromagnetisch beeinflusst wird.

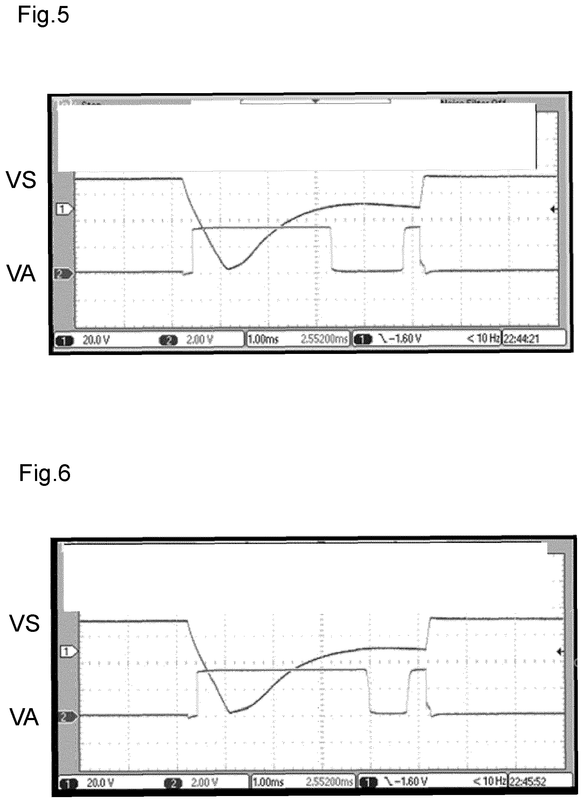

Figur 5 zeigt die Sprungantwort VS und eine digitalisiertes Ausgangssignal VA für den Fall, dass keine Halteplatte in der Nähe des Elektromagneten ist. Das digitalisierte

Ausgangssignal VA wird aufgrund eines Schwellwertvergleiches mit der Sprungantwort VS gebildet und von der Steuer- und Auswerteeinheit 9 ausgewertet. Sobald das Signal der Sprungantwort VS einen bestimmten Pegel unterschreitet, hat das Ausgangssignal VA einen positiven Pegel. Damit hat das Ausgangssignal VA einen ersten längeren Puls und einen zweiten kürzeren Puls gemäß Figur 5.

Ohne Halteplatte 12 wird der Kondensator 14 im Schwingkreis 15, gemäß Figur 2 während der Pulsdauer beispielsweise schneller entladen, so dass die Sprungantwort VS eine Ladekurve des Kondensators 14 mit einer kurzen Zeitkonstanten bildet, gemäß Figur 5.

Beispielsweise triggert die Steuer- und Auswerteeinheit 9, welche beispielsweise als Mikrocontroller ausgebildet ist den 5 ms langen Puls in Abständen von 500 ms und überwacht das Ausgangssignal VA bzw. die Ausgangsspannung. Die Steuer- und Auswerteeinheit 9 bzw. der Mikrocontroller überprüft das Ausgangssignal VA beispielsweise über Polling per Software oder über eine Interrupt-Routine per Soft- oder Hardware.

Figur 6 zeigt die Sprungantwort VS und eine digitalisiertes Ausgangssignal VA für den Fall, dass die Halteplatte 12 in der Nähe des Elektromagneten 11 ist. Das digitalisierte Ausgangssignal VA wird aufgrund eines Schwellwertvergleiches mit der Sprungantwort VS gebildet und von der Steuer- und Auswerteeinheit 9 ausgewertet. Sobald das Signal der Sprungantwort VS einen bestimmten Pegel unterschreitet wird hat das Ausgangssignal VA einen positiven Pegel. Der erste längere Puls des Ausgangssignals VA ist gemäß Figur 6 gegenüber dem Ausgangssignal VA gemäß Figur 5 verlängert.

Ist die Halteplatte 12 wenige Millimeter von dem Elektromagnet 11 entfernt so wird der Kondensator 14 im Schwingkreis 15, gemäß Figur 2, während der Pulsdauer beispielsweise weniger schnell entladen, so dass die Sprungantwort VS eine Ladekurve mit einer längeren Zeitkonstanten ist, gemäß Figur 6.

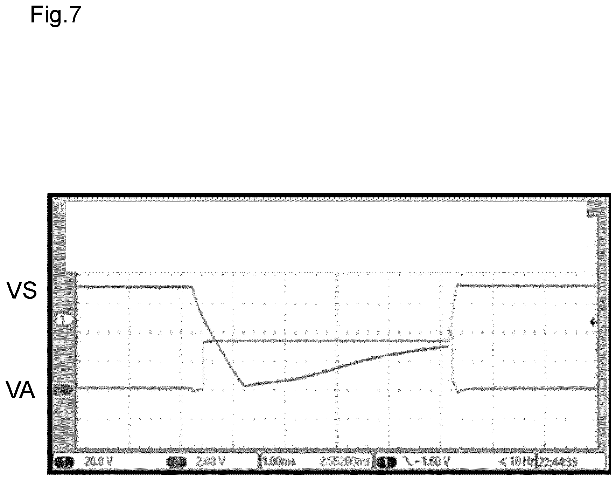

Ist die Halteplatte 12 in Kontakt, bzw. in elektrischem Kontakt mit dem Elektromagnet 11, so wird der Kondensator 14 im Schwingkreis 15 während der Pulsdauer beispielsweise am langsamsten entladen, so dass die Sprungantwort VS eine Ladekurve mit einer noch längeren Zeitkonstanten ist, gemäß Figur 7.

Figur 7 zeigt die Sprungantwort VS und eine digitalisiertes Ausgangssignal VA für den Fall, dass die Halteplatte 12 in Kontakt mit dem Elektromagneten 11 ist. Das digitalisierte Ausgangssignal VA wird ebenfalls aufgrund eines Schwellwertvergleiches mit der Sprungantwort VS gebildet und von der Steuer- und Auswerteeinheit 9 gemäß Figur 1 ausgewertet. Sobald das Signal der Sprungantwort VS einen bestimmten Pegel unterschreitet wird hat das Ausgangssignal VA einen positiven Pegel. Der erste längere Puls des Ausgangssignals VA ist gemäß Figur 7, gegenüber Figur 6 verlängert und nur noch ein einziges längeres Signal.

Detektiert die Steuer- und Auswerteeinheit 9 den Kontakt zwischen Elektromagnet 11 und Halteplatte 12 so wird beispielsweise kein Impulssignal 18 mehr von der Steuer- und Auswerteeinheit 9 erzeugt und eine kontinuierliche Versorgungsspannung VDD von beispielsweise 24 Volt, ohne Unterbrechungen an dem Elektromagneten 11 angelegt.

Wird der Sicherheitsschalter 2, gemäß Figur 1 geöffnet, was beispielsweise über den Signalempfänger 7 detektierbar ist, so kann die Steuer- und Auswerteeinheit 9 erneut den Elektromagneten 11 zyklisch das Impulssignal 18 anlegen, um erneut einen Kontakt mit der Halteplatte 12 zu detektieren.

Gemäß den Figuren 5 bis 7 kann beispielsweise die Flankensteilheit der Sprungantwort VS oder ein Vergleich der Sprungantwort VS mit einem Vergleichswert bzw. einem Schwellwert verglichen werden.

Die Auswertung der Sprungantwort VS erfolgt beispielsweise über eine einfache Transistorschaltung gemäß Figur 2 bzw. eine Transistorstufe, welche von der Steuer- und Auswerteeinheit 9 ausgewertet wird.

Gemäß Figur 2 ist der Schwingkreis 15 ein Parallelschwingkreis. Dabei liegt die Spule 13 des Elektromagneten 11 parallel zu dem Kondensator 14.

Der Parallelschwingkreis hat den Vorteil, dass die Spule 13 bzw. der Elektromagnet 11 statisch betrieben werden kann und der Kondensator 14 im statischen Betriebsmodus quasi keine Auswirkung hat da dieser geladen ist und damit einen nahezu unendlich hohen Widerstand bildet.

Gemäß Figur 2 beträgt ein Dämpfungsfaktor ξ des Schwingkreises 15 beispielsweise höchstens 0,3 und insbesondere höchstens 0,2. Damit wird ein Schwingkreis 15 mit einer hohen Güte gebildet. Damit werden während der kurzen Abschaltungsimpulsen bzw. Spannungsimpulsen steile Flanken der Impulsantwort erzeugt die einfach auszuwerten sind gemäß den Figuren 5 bis 7.

Gemäß Figur 3 beträgt die Impulsbreite maximal 6 ms, insbesondere maximal 5 ms, wobei die Impulse einen Abstand von mindestens 400 ms insbesondere von mindestens 500 ms haben. Damit führt die Impulsbreite nicht zu einer Funktionseinschränkung des Elektromagneten 11 im aktiven Zustand mit angelegter Spannung. Weiter ist die Impulsbreite bzw. Impulslänge lang genug, um eine einfache Auswertung vornehmen zu können.

Gemäß Figur 2 ist zur Auswertung der Impulsantwort beispielsweise ein NPN-Transistor 16 angeordnet. Der NPN-Transistor 16 ist in einer Emitter-Schaltung angeordnet. Dabei ist die Spannung des Elektromagneten 11 über eine Spannungssteiler dem NPN-Transistor als Eingangssignal zugeführt. Der Kollektoranschluss ist über einen Widerstand mit einem Bezugspotential von beispielsweise 3,3 V verbunden. Der Emitteranschluss ist gegen Masse geschaltet. Der Kollektor ist als Signalausgang mit der Steuer- und Auswerteeinheit 9 gemäß Figur 1 verbunden.

Dabei führt eine abnehmende Spannung der Sprungantwort VS an dem Basisanschluss zu einem Sperren des Transistors 16 und damit zu einem positiven digitalisierten Spannungssignal bzw. Ausgangssignal VA an dem Ausgang des Transistors 16 nämlich der Kollektor-Emitter Strecke des Transistors 16.

Das positive Ausgangssignal VA des Transistors 16 ist umso länger je langsamer der Kondensator 14 aufgeladen wird bzw. je länger die Zeitkonstante ist, gemäß den Figuren 5 bis 7.

Damit kann am Ausgang des Transistors 16 bzw. der Transistorstufe ein einfaches digitales Ausgangssignal VA von der Steuer- und Auswerteeinheit 9 ausgewertet werden.

Gemäß Figur 1 ist der Signalgeber 8 und der Signalempfänger 7 beispielsweise als RFID-System mit RFID-Transponder und RFID-Lesegerät ausgebildet sind. Dabei ist der RFID-Transponder an dem ersten Teilkörper 5 angeordnet an dem die Halteplatte angeordnet ist. Damit bildet der erste Teilkörper 5 ein passives Bauteil, ohne eigene Spannungsversorgung.

Das RFID-Lesegerät ist an dem zweiten Teilkörper 6 angeordnet an dem auch der Elektromagnet 11 angeordnet ist. Der zweite Teilkörper 6 bildet ein aktives Bauteil mit einem Anschluss für Signalleitungen und eine Spannungsversorgung. Mit dem RFID-Lesegerät kann festgestellt werden, ob sich der RFID-Transponder in der Nähe des RFID-Lesegeräts befindet. Dadurch kann festgestellt werden ob der erste Teilkörper 5 in der Nähe des zweiten Teilkörpers 6 ist.

### Bezugszeichen:

- 1: Sicherheitssystem
- 2: Sicherheitsschalter
- 3: Schutzeinrichtung
- 4: Grundgehäuse
- 5: erster Teilkörper
- 6: zweiter Teilkörper
- 7: Signalempfänger
- 8: Signalgeber
- 9: Steuer- und Auswerteeinheit
- 10: Verriegelungseinheit
- 11: Elektromagnet
- 12: Halteplatte
- 13: Spule
- 14: Kondensator
- 15: Schwingkreis
- 16: Transistor
- 17: RFID-System
- 18: Impulssignal
- 19: Anlage
- 20: Roboter
- 21: Gefahrenbereich
- 22: Person

- VDD: Versorgungsspannung
- VS: Sprungantwort
- VA: Ausgangssignal

## Patentansprüche

1. Sicherheitssystem (1) mit einem Sicherheitsschalter (2) zum Überwachen eines sicheren Schutzeinrichtungszustandes einer beweglichen Schutzeinrichtung (3), mit einem Grundgehäuse (4), das aus zumindest zwei Teilkörpern (5, 6) besteht, die zueinander positionierbar sind, wobei ein Signalempfänger (7) in einem Teilkörper (5) und ein Signalgeber (8) in dem anderen Teilkörper (6) vorgesehen sind, so dass ein sicherer Zustand der Schutzeinrichtung (3) mittels einer Steuer- und Auswerteeinheit (9) erfassbar ist,
und einer Verriegelungseinheit (10) mit einem Elektromagnet (11) und einer Halteplatte (12), welche dem Elektromagnet (11) gegenüberliegt, zum Verriegeln oder Entriegeln der Schutzeinrichtung (3),
wobei die Steuer- und Auswerteeinheit (9) ausgebildet ist, nach Überprüfung und Verifikation des Signalempfängers (7) die Verriegelungseinheit (10) zu entriegeln oder verriegeln,
**dadurch gekennzeichnet, dass**
eine Spule (13) des Elektromagneten (11) mit einem Kondensator (14) einen Schwingkreis (15) bildet, wobei die Steuer- und Auswerteeinheit (9) ausgebildet ist, den Schwingkreis (15) zyklisch mit mindestens einem Impulssignal (18) anzusteuern und die Steuer- und Auswerteeinheit (9) ausgebildet ist, die Impulsantwort (VS) von dem Schwingkreis (15) auszuwerten und abhängig von der Impulsantwort (VS) durch die Steuer- und Auswerteeinheit (9) mindestens ein Kontakt oder ein Nichtkontakt zwischen dem Elektromagnet (11) und der Halterplatte (12) detektierbar ist.

2. Sicherheitssystem (1) nach Anspruch 1, **dadurch gekennzeichnet, dass** der Schwingkreis (15) ein Parallelschwingkreis ist.

3. Sicherheitssystem (1) nach mindestens einem der vorhergehenden Ansprüche, **dadurch gekennzeichnet, dass** ein Dämpfungsfaktor ξ höchstens 0,3 und insbesondere höchstens 0,2 beträgt.

4. Sicherheitssystem (1) nach mindestens einem der vorhergehenden Ansprüche, **dadurch gekennzeichnet, dass** die Impulsbreite des Impulssignals (18) maximal 6ms, insbesondere maximal 5ms beträgt.

5. Sicherheitssystem (1) nach mindestens einem der vorhergehenden Ansprüche, **dadurch gekennzeichnet, dass** zur Auswertung der Impulsantwort VS ein NPN-Transistor oder eine NPN-Transistorstufe angeordnet ist.

6. Sicherheitssystem (1) nach mindestens einem der vorhergehenden Ansprüche, **dadurch gekennzeichnet, dass** der Signalgeber 8 und der Signalempfänger 7 als RFID-System (16) mit RFID-Transponder und RFID-Lesegerät ausgebildet sind.

## Claims

1. A safety system (1) having a safety switch (2) for monitoring a safe protective device status of a movable protective device (3), having a base housing (4) that comprises at least two part members (5, 6) that can be positioned with respect to one another, wherein a signal receiver (7) is provided in one part member (5) and a signal transmitter (8) is provided in the other part member (6) so that a safe state of the protective device (3) is detectable by means of a control and evaluation unit (9),
and having an interlocking device (10) having an electromagnet (11) and a retaining plate (12) that is disposed opposite the electromagnet (11) for locking or unlocking the protective device (3),
wherein the control and evaluation unit (9) is configured to unlock or lock the interlocking unit (10) after checking and verifying the signal receiver (7), **characterized in that**
a coil (13) of the electromagnet (11) forms a resonant circuit (15) with the capacitor (14), with the control and evaluation unit (9) being configured to control the resonant circuit (15) cyclically by at least one pulse signal (18), and with the control and evaluation unit (9) being configured to evaluate the pulse response (VS) from the resonant circuit (15) and with at least one contact or a non-contact between the electromagnet (11) and the retaining plate (12) being detectable by the control and evaluation unit (9) in dependence on the pulse response (VS).

2. A safety system (1) in accordance with claim 1, **characterized in that** the resonant circuit (15) is a parallel resonant circuit.

3. A safety system (1) in accordance with at least one of the preceding claims, **characterized in that** a damping factor ζ amounts to at most 0.3 and in particular to at most 0.2.

4. A safety system (1) in accordance with at least one of the preceding claims, **characterized in that** the pulse width of the pulse signal (18) amounts to a maximum of 6 ms, in particular to a maximum of 5 ms.

5. A safety system (1) in accordance with at least one of the preceding claims, **characterized in that** an NPN transistor or an NPN transistor stage is arranged for the evaluation of the pulse response (VS).

6. A safety system (1) in accordance with at least one of the preceding claims, **characterized in that** the signal transmitter (8) and the signal receiver (7) are configured as an RFID system (16) having an RFID transponder and an RFID reading unit.

## Revendications

1. Système de sécurité (1) comportant un interrupteur de sécurité (2) pour surveiller un état sûr d'un dispositif de protection mobile (3), comportant un boîtier de base (4) constitué d'au moins deux corps partiels (5, 6) pouvant être positionnés l'un par rapport à l'autre, un récepteur de signaux (7) étant prévu dans un corps partiel (5) et un émetteur de signaux (8) étant prévu dans l'autre corps partiel (6), de sorte qu'un état sûr du dispositif de protection (3) peut être détecté au moyen d'une unité de commande et d'évaluation (9),
et comportant une unité de verrouillage (10) ayant un électroaimant (11) et une plaque de retenue (12), qui est située à l'opposé de l'électroaimant (11), pour verrouiller ou déverrouiller le dispositif de protection (3),
l'unité de commande et d'évaluation (9) étant réalisée pour déverrouiller ou verrouiller l'unité de verrouillage (10) après le contrôle et la vérification du récepteur de signaux (7),
**caractérisé en ce que**
une bobine (13) de l'électroaimant (11) forme un circuit oscillant (15) avec un condensateur (14), l'unité de commande et d'évaluation (9) étant réalisée pour piloter le circuit oscillant (15) de manière cyclique avec au moins un signal d'impulsion (18), et l'unité de commande et d'évaluation (9) étant réalisée pour évaluer la réponse impulsionnelle (VS) du circuit oscillant (15) et, en fonction de la réponse impulsionnelle (VS), au moins un contact ou un non-contact entre l'électroaimant (11) et la plaque de retenue (12) peut être détecté par l'unité de commande et d'évaluation (9).

2. Système de sécurité (1) selon la revendication 1, **caractérisé en ce que** le circuit oscillant (15) est un circuit oscillant parallèle.

3. Système de sécurité (1) selon l'une au moins des revendications précédentes, **caractérisé en ce qu'**un facteur d'amortissement ξ est de 0,3 au maximum et en particulier de 0,2 au maximum.

4. Système de sécurité (1) selon l'une au moins des revendications précédentes, **caractérisé en ce que** la largeur d'impulsion du signal impulsionnel (18) est de 6ms au maximum, en particulier de 5ms au maximum.

5. Système de sécurité (1) selon l'une au moins des revendications précédentes, **caractérisé en ce qu'**un transistor NPN ou un étage de transistor NPN est disposé pour évaluer la réponse impulsionnelle VS.

6. Système de sécurité (1) selon l'une au moins des revendications précédentes, **caractérisé en ce que** l'émetteur de signaux 8 et le récepteur de signaux 7 sont réalisés sous forme de système RFID (16) avec transpondeur RFID et lecteur RFID.
